# EUROPEAN PATENT APPLICATION

(11) **EP 1 669 410 A1**
(43) Date of publication of application: **14.06.2006**
(21) Application number: 05257495.1
(22) Date of filing: 06.12.2005
(51) Int. Cl.: C08L 67/06, C09D 167/06, C09D 5/34, B05D 5/00

(54) **Polyester putty composition**

(30) Priority: 07.12.2004 US 5688
(71) Applicant: Illinois Tool Works, Inc., Glenview, IL 60026-1215 (US)
(72) Inventor: Reynolds, Jeffrey Andrew, Cincinnati, Ohio 45213 (US)
(74) Representative: Jones, Helen M.M.

(57) **Abstract**

A polyester putty composition or filler used in surface finishes wherein the polyester putty composition comprises an unsaturated polyester and vinyl toluene as its reactive diluent. The vinyl toluene substantially reduces visible imperfections in the surface finish. The polyester putty composition improves the efficiency of the surface finishing method by eliminating or reducing the primer surfacer and sealer steps.

## Description

### Field of the Invention

The present invention relates to polyester body fillers and putties that are used in surface repairs and surface finishing for equipment and vehicles such as automotive, marine, agricultural and airborne vehicles, and industrial equipment.

### Background to the Invention

Traditionally, the automotive aftermarket has utilized well defined processes in the area of vehicle body repair. However, the method for repairing a damaged vehicle by painting is complicated, because the conventional method inevitably prolongs the time required for body repairs and raises the costs of using tools and materials.

Under conventional methods, the damaged area is typically manipulated back to the original profile as closely as possible. These methods often require a filling step followed by primer steps. The damaged area is sanded out and filled with a polyester putty composition. Subsequently, the filled and sanded area is covered with a primer surfacer to fill the imperfections, and then finished with a primer sealer before the color and clearcoats are applied.

In continuing efforts to reduce time, labor, materials, and environmental hazards, the industry has moved toward fast repair systems, with substrate preparation that is less invasive to the existing paint systems, and new primers that eliminate spray steps with alternative application methods such as rolling or spreading.

Even with new methods in place, some obstacles have caused problems for productivity. Urethane primers contain volatile organic solvents, which present problems for rolling or spreading applications. The solvents also have slow drying and curing times, and the rollable primers often require special equipment to cure. Also, polyester fillers and putties contain styrene monomer as a reactive diluent. Styrene monomer can attack urethane systems causing swelling and softening of the substrate. Under traditional repair conditions, a primer surfacer will correct those problems, but when a color coat is applied directly over the polyester putty composition, the imperfections are visible. Polyester primers have some of the same drying and volatility issues.

There remains a need in the art for a polyester putty composition that eliminates or reduces the number of primer steps to promote efficiency while providing a surface finish without visual imperfections.

### Summary of the Invention

The present invention relates generally to polyester putty compositions that can be used in surface repairs and finishes, and relates specifically to a polyester putty composition useful in surface finishes in the automotive body repair market. The present invention uses a polyester putty composition which contains a vinyl toluene as its reactive diluent. Unlike styrene monomer, which is the conventional reactive diluent, vinyl toluene does not attack urethane systems; therefore, substantially less visual imperfections on the surface are created when using vinyl toluene instead of styrene monomer.

Another embodiment of the present invention is a method for providing a surface finish using a polyester putty composition, while eliminating or reducing the need for a primer sealer and surfacer. Because vinyl toluene substantially eliminates or reduces the visual imperfections associated with the styrene monomer, the primer steps are not necessary or are less necessary. Under traditional methods, the primer steps fix the visual imperfections created by a polyester putty composition containing styrene monomer; however, a polyester putty composition comprising vinyl toluene eliminates or reduces the visual imperfections, thereby eliminating or reducing the need for the primer steps prior to painting the surface. In accordance with the present invention, a color coat can be applied directly over the polyester putty composition with substantially less visible imperfections. As a result, there is significant savings in time and material, thereby increasing productivity of the refinishing process.

### Detailed Description

The present invention is a polyester putty composition utilized in surface repairs and finishes. The polyester putty composition comprises vinyl toluene as its reactive diluent instead of styrene monomer, which is the traditional component material used in polyester putties. Similar to styrene, vinyl toluene is a reactive diluent which dries to sand quickly and virtually eliminates volatile organics in the filler and primer steps of the repair. However, vinyl toluene contains no appreciable swelling and little softening of the substrate, as occurs with styrene monomer. In addition to vinyl toluene, the polyester putty composition may comprise an unsaturated polyester resin, a reactive diluent comprised of vinyl toluene, and optional ingredients such as petroleum wax, a talc, fillers, thickening agents, finishing agents, polymerization inhibitors, antioxidants, and various combinations thereof. A sample polyester putty composition in accord with the present invention is shown in the following table:

| **Raw Material** | **Pounds:** | **Wt %:** | **Range: About** |
|---|---|---|---|
| Unsaturated Polyester | 30 | 58.8% | 40 - 60% |
| Vinyl Toluene | 1.15 | 2.25% | 1-5% |
| Refined Petroleum Wax | 0.15 | 0.29% | .1-3% |
| THPA (Tetrahydrophthalic anhydride) | 1 | 1.96% | 1-3% |
| Polymerization Inhibitor | _ | _ | 0 - .05% |
| Advitrol 8-10 | 0.25 | 0.49% | .2-.7% |
| CaCO₃ | 6.5 | 12.74% | 8-15% |
| Precipitated Silica | 1.5 | 2.94% | 1-3% |
| TiO₂ | 1.3 | 2.55% | 1-3% |
| Talc | 9.15 | 17.9% | 15-22% |
| Antioxidant | 0.01 | 0.02% | 0 - .05% |

According to the sample composition shown in the table above, the unsaturated polyester comprises a glycol and unsaturated dibasic acid combination. THPA has been added as an additive for the unsaturated polyester in accordance with the teachings of U.S. Patent No. 5,456,947. Other suitable resins known to one of ordinary skill in the art may be substituted. Advitrol® is a castor thixotropic agent which is added as a thickening component for the polyester putty composition. It is manufactured by the Süd-Chemie Group.

A further embodiment of the present invention centers on the method of using this polyester putty composition in a surface finish and repair. Below is a sample method in accordance with the present invention. A standard method comprises the following steps:
Step 1: (Grinding) The damaged area is ground out with orbital DA sander of about 80 grit. This step takes approximately 5 minutes.
Step 2: (Sand Scratch Reduction) When using the 80 grit DA sander, numerous scratches result. To remove the scratches, a DA sander with a less coarse grit of about 220 is applied over the surface. This step takes approximately 5 minutes.
Step 3: (Final Preparation for Putty Application) Prior to applying the polyester putty composition, the surface is sanded with a low coarse orbital DA sander typically about 320 grit. This helps ensure a smooth surface prior to painting. The step takes approximately 5 minutes.
Step 4: (Putty Application) The polyester putty composition is then applied over the repair surface area with a substantial overlap. The step takes approximately 5 minutes.
Step 5: (Putty Drying) After application of the polyester putty composition, the area is dried briefly for approximately 15 minutes.
Step 6: (Post-Application Sanding) After application and drying, the area is sanded down with a DA sander of about 320 grit. The overlap area is not sanded completely at this point. The step takes approximately 5 minutes.
Step 7: (Final Sand Preparation) Prior to painting, the area undergoes a final sanding with a low coarse sander, such as 600 grit wet DA sander. The step takes approximately 5 minutes.
Step 8: (Basecoat Application) Typically, the surface is painted with 3 basecoats of paint, but the amount of coats may vary. The paint time takes about 45 minutes.
Step 9: (Drying) After applying the last basecoat layer, the surface must be allowed to dry for at least 30 minutes.
Step 10: (Clearcoat Application) Typically, the surface is painted with 2 coats of clearcoat. The paint time takes approximately 30 minutes.

Other methods, such as versions of the conventional UPSS and Fast Past methods utilizing the polyester putty compositions, are also possible.

In any event, the method of the present invention eliminates or reduces the primer sealing and surfacing steps. Under conventional methods, two coats of primer surfacer and sealer would be added prior to the application of the basecoats. Upon filling a surface with a polyester putty composition of the present invention, the surface manifests substantially fewer imperfections than a polyester putty composition with styrene monomer. As a result, a primer step, which reduces visible imperfections, is rendered unnecessary or less necessary. Eliminating or reducing these steps reduces repair time by about 30 minutes. The process is thus made more efficient, because a shorter surface finishing method requires less labor cost, and the costs of primer surfacer and sealer are eliminated or reduced. Furthermore, the replacement of styrene monomer with vinyl toluene in the surface finishing method saves spray gun set-up and break down, and hazardous waste associated with it.

It is noted that terms like "specifically," "commonly," "typically", and "often" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention. It is also noted that terms like "substantially" and "about" are utilized herein to represent the inherent degree of uncertainty that may be attributed to any quantitative comparison, value, measurement, or other representation.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A polyester putty composition useful in surface finishes comprising an unsaturated polyester, and a reactive diluent comprised of vinyl toluene.

2. A polyester putty composition according to claim 1 wherein the unsaturated polyester comprises a glycol and unsaturated dibasic acid combination.

3. A polyester putty composition according to claim 2 wherein the composition further includes an additive for the unsaturated polyester.

4. A polyester putty composition as in claim 4 wherein the additive for the unsaturated polyester comprises tetrahydrophthalic anhydride (THPA).

5. A polyester putty composition according to claim 1 further including a petroleum wax.

6. A polyester putty composition according to claim 1 further including a talc.

7. A polyester putty composition according to claim 1 further including at least one filler.

8. A polyester putty composition according to claim 1 further including at least one thickening agent, preferably a thixotropic agent.

9. A polyester putty composition according to claim 1 further including at least one finishing agent, preferably titanium dioxide.

10. A polyester putty composition according to claim 1 further including an antioxidant.

11. A polyester putty composition according to claim 1 further including a polymerization inhibitor.

12. A method of providing a surface finish comprising the steps of:
(i) providing a substrate;
(ii) applying a polyester putty composition comprised of an unsaturated polyester and vinyl toluene over the substrate; and
(iii) applying at least one basecoat over the applied polyester putty composition.

13. The method of claim 12 wherein no primer step is carried out after step (ii) before the at least one basecoat of paint is applied in step (iii)

14. The method of claim 12, wherein after step (ii) and before step (iii), the applied polyester putty composition is dried to react the composition.

15. A method according to claim 12 wherein the polyester putty composition further includes:
a petroleum wax;
a talc;
at least one filler;
at least one thickening agent;
at least one finishing agent; and
a polymerization inhibitor.

16. The method according to any of claims 12 to 15 wherein the substrate in step (i) is
a body surface having a damaged area wherein the damaged area of the body surface has been grinded out; scratches to the damaged area have been reduced with a second sanding device and the damaged area is sanded with a third sanding device; and wherein after step (ii), the damaged area is dried to react the composition and then sanded with a fourth sanding device; and wherein after step (iii) the damaged area is dried and the method includes a final step of
(iv) applying at least one clearcoat of paint to the damaged area.
